# FASCICULE DE BREVET EUROPEEN

(11) **EP 3 714 243 B1**
(45) Date de publication et mention de la délivrance du brevet: **20.10.2021**
(21) Numéro de dépôt: 18821718.6
(22) Date de dépôt: 19.11.2018
(51) Int. Cl.: G01J 5/20, G01J 5/06, G01J 5/02, G01J 5/08

(54) **DISPOSITIF DE DÉTECTION D'UN RAYONNEMENT ÉLECTROMAGNÉTIQUE A DIAPHOTIE RÉDUITE**
VORRICHTUNG ZUR DETEKTION ELEKTROMAGNETISCHER STRAHLUNG MIT VERRINGERTEM ÜBERSPRECHEN
DEVICE FOR DETECTING ELECTROMAGNETIC RADIATION WITH REDUCED CROSSTALK

(30) Priorité: 21.11.2017 FR 1760961
(43) Date de publication de la demande: 30.09.2020
(73) Titulaire: Commissariat à l'énergie atomique et aux énergies alternatives, 75015 Paris (FR)
(72) Inventeur: BECKER, Sébastien, 38500 Voiron (FR)
(74) Mandataire: INNOV-GROUP
(86) Numéro de dépôt international: PCT/FR2018/052903
(87) Numéro de publication internationale: WO 2019/102121

(56) Documents cités:
- EP-A2- 3 067 674
- FR-A1- 2 966 595
- US-A1- 2004 217 264
- US-A1- 2017 328 778

## Description

### DOMAINE TECHNIQUE

Le domaine de l'invention est celui des dispositifs de détection de rayonnement électromagnétique, en particulier infrarouge, comportant une matrice de détecteurs thermiques à membranes absorbantes suspendues au-dessus du substrat. L'invention s'applique notamment au domaine de l'imagerie infrarouge et de la thermographie.

### ÉTAT DE LA TECHNIQUE ANTÉRIEURE

Un dispositif de détection de rayonnement électromagnétique, par exemple infrarouge, comprend habituellement une matrice de détecteurs thermiques, formant une pluralité de pixels sensibles, comportant chacun une portion apte à absorber le rayonnement électromagnétique à détecter. Un tel dispositif est divulgué par exemple dans EP3067674.

Dans le but d'assurer l'isolation thermique des détecteurs thermiques, les portions absorbantes se présentent habituellement sous la forme de membranes suspendues par des piliers d'ancrage au-dessus du substrat, et isolées thermiquement de celui-ci par des bras de maintien et d'isolation thermique. Ces piliers d'ancrage et bras de maintien assurent également une fonction électrique en reliant électriquement les membranes absorbantes à un circuit de lecture généralement disposé dans le substrat.

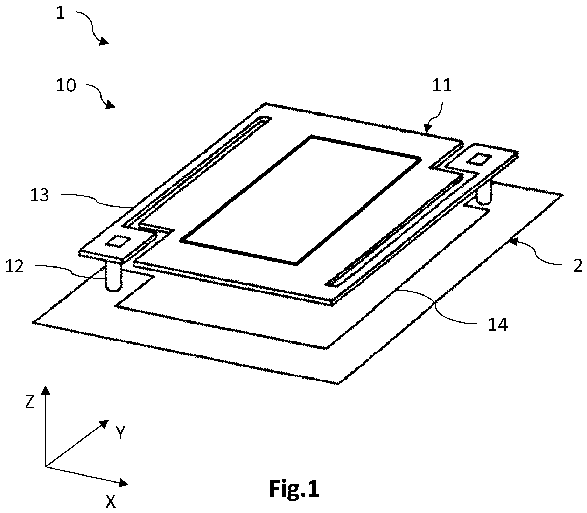

La figure 1 illustre un exemple d'un détecteur thermique 10 d'un tel dispositif de détection 1. Chaque membrane absorbante 11 des pixels sensibles est suspendue au-dessus du substrat 2 à une distance non nulle de ce dernier. Pour améliorer l'absorption du rayonnement électromagnétique à détecter, une couche réflectrice 14 peut être disposée sur le substrat 2 en regard de la membrane absorbante 11. L'espacement entre la membrane absorbante 11 et la couche réflectrice 14 est alors choisi pour former une cavité quart d'onde résonnante pour une longueur d'onde de référence comprise dans la gamme de longueurs d'onde du rayonnement électromagnétique à détecter.

Il existe cependant un besoin de disposer de tels dispositifs de détection dont la diaphotie soit réduite.

### EXPOSÉ DE L'INVENTION

L'invention a pour objectif de remédier au moins en partie aux inconvénients de l'art antérieur, et plus particulièrement de proposer un dispositif de détection de rayonnement électromagnétique, par exemple infrarouge, qui présente une diaphotie réduite.

Pour cela, l'objet de l'invention est un dispositif de détection d'un rayonnement électromagnétique, comprenant :
- un substrat, comportant un circuit de lecture ;
- une matrice de détecteurs thermiques destinés à absorber le rayonnement électromagnétique à détecter, disposés sur le substrat, chaque détecteur thermique comprenant :
   ∘ une membrane absorbante suspendue au-dessus du substrat par des piliers d'ancrage disposés sur et au contact du substrat, et par des bras de maintien, les piliers d'ancrage et les bras de maintien assurant une connexion électrique de la membrane absorbante au circuit de lecture, et
   ∘ une couche réflectrice disposée sur le substrat en regard de la membrane absorbante.

Selon l'invention, le dispositif de détection comporte au moins une paroi verticale opaque, disposée sur et au contact du substrat et s'étendant longitudinalement entre deux détecteurs thermiques adjacents, et réalisée en un matériau opaque vis-à-vis du rayonnement électromagnétique à détecter.

De plus, la paroi verticale opaque s'étend longitudinalement suivant un axe passant par deux piliers d'ancrage voisins. Autrement dit, la paroi verticale opaque s'étend de manière coaxiale à un axe passant par deux piliers voisins. Par ailleurs, chaque pilier d'ancrage est une structure présentant une hauteur, suivant un axe orthogonal à un plan parallèle au substrat, supérieure à ses dimensions dans le plan parallèle au substrat. Par « disposé sur le substrat », on entend qui repose sur le substrat suivant un axe orthogonal à un plan parallèle au substrat.

La paroi verticale opaque est, par ailleurs, réalisée d'un seul tenant avec au moins un pilier d'ancrage. Chaque paroi verticale opaque est avantageusement réalisée en le ou les mêmes matériaux que les piliers d'ancrage.

Certains aspects préférés, mais non limitatifs de ce dispositif de détection sont les suivants.

Chaque détecteur thermique peut être entouré, dans un plan parallèle au substrat, par des parois verticales opaques. Il peut être entouré de manière continue ou discontinue.

Chaque détecteur thermique peut comporter quatre piliers d'ancrage. Chacun des côtés de la membrane absorbante, dans un plan parallèle au substrat, est bordé par au moins deux parois verticales opaques distantes l'une de l'autre suivant leur axe longitudinal. Les deux parois verticales opaques s'étendent de préférence de manière coaxiale.

La paroi verticale opaque peut être distante des bras de maintien et de la membrane absorbante. On permet ainsi l'évacuation de la couche sacrificielle utilisée pour la réalisation des détecteurs thermiques. De plus, l'isolation thermique des membranes absorbantes n'est pas perturbée par la présence de la paroi verticale opaques.

Le dispositif de détection peut comporter une pluralité de parois verticales opaques. Au moins deux parois verticales opaques peuvent s'étendre longitudinalement entre les membranes absorbantes des deux détecteurs thermiques adjacents, lesdites parois verticales opaques étant distantes l'une de l'autre suivant leur axe longitudinal.

Lesdites parois verticales opaques peuvent être distantes l'une de l'autre suivant leur axe longitudinal d'une distance inférieure ou égale à λ₀/10, λ₀ étant une longueur d'onde centrale d'une gamme de longueurs d'onde du rayonnement électromagnétique à détecter.

Ladite distance peut être inférieure ou égale à 1,4µm.

Un même détecteur thermique peut être entouré d'une pluralité de parois verticales opaques distinctes les unes des autres et espacées les unes des autres d'une distance non nulle.

Le matériau opaque peut présenter une transmission du rayonnement électromagnétique à détecter inférieure ou égale à 5%, et de préférence inférieure ou égale à 1%.

Le rayonnement électromagnétique à détecter peut présenter une gamme de longueurs d'onde comprise de 8µm à 14µm.

Une ou plusieurs parois verticales opaques consécutives peuvent border un même côté d'un détecteur thermique sur au moins 50% de la longueur du côté.

L'invention porte également sur un procédé de fabrication d'un dispositif de détection selon l'une quelconque des caractéristiques précédentes. Le procédé comporte les étapes suivantes :
- fourniture du substrat ;
- dépôt d'une couche sacrificielle sur le substrat ;
- réalisation d'au moins une paroi verticale opaque et des piliers d'ancrage au travers de la couche sacrificielle ;
- réalisation des bras de maintien et de la membrane absorbante sur la couche sacrificielle ;
- suppression de la couche sacrificielle.

Les piliers d'ancrage et la paroi verticale opaque sont avantageusement réalisés simultanément et en le ou les mêmes matériaux.

La paroi verticale opaque présente avantageusement une hauteur, suivant un axe orthogonal à un plan parallèle au substrat, sensiblement égale à celle des piliers d'ancrage.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique en perspective d'un détecteur thermique d'un dispositif de détection selon un exemple de l'art antérieur ;
les figures 2A et 2B sont des vues schématiques de dessus d'un dispositif de détection selon un mode de réalisation, illustrant les membranes absorbantes suspendues des pixels sensibles (fig.2A) et les couches réflectrices séparées par des parois verticales opaques (fig.2B) ;
les figures 3A et 3B sont des vues schématiques du dispositif de détection illustré sur les fig.2A et 2B, suivant le plan de coupe A-A (fig.3A) et suivant le plan de coupe B-B (fig.3B) ;
les figures 4A à 4I sont des vues schématiques en coupe de différentes étapes d'un procédé de fabrication du dispositif de détection selon une variante de réalisation ;
les figures 5A à 5C sont des vues schématiques de dessus de différents dispositifs de détection selon des variantes de réalisation, et la figure 5D est une vue schématique de la variante illustrée sur la fig.5C suivant le plan de coupe E-E ; Les variantes présentées en Fig. 5B et 5C ne sont pas selon l'invention.
la figure 6A est une vue schématique de dessus d'un dispositif de détection selon une variante de réalisation, et les figures 6B, 6C, 6D sont des vues schématiques en coupe de la variante illustrée sur la fig.6A suivant différents plans de coupe.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près. Par ailleurs, l'expression « comportant un » doit être comprise comme « comportant au moins un », sauf indication contraire.

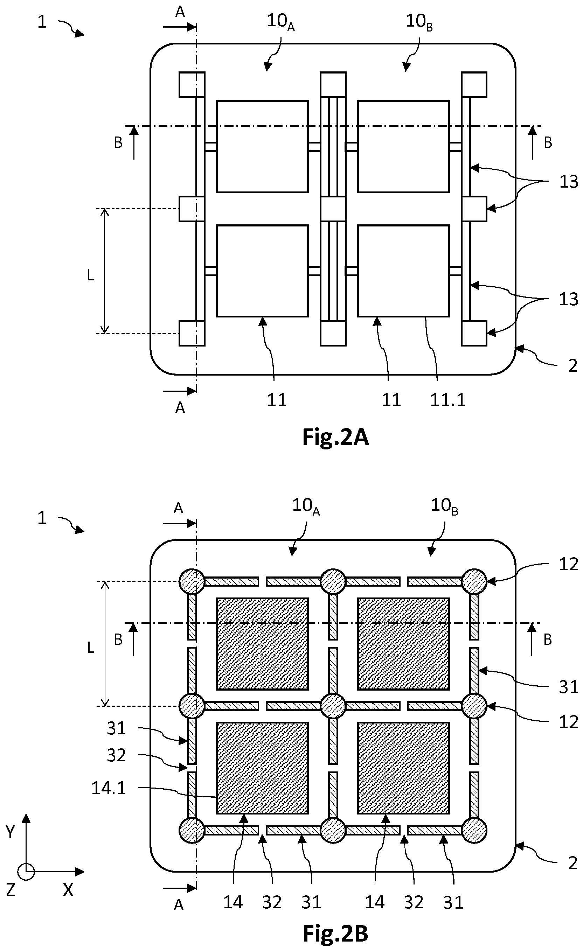

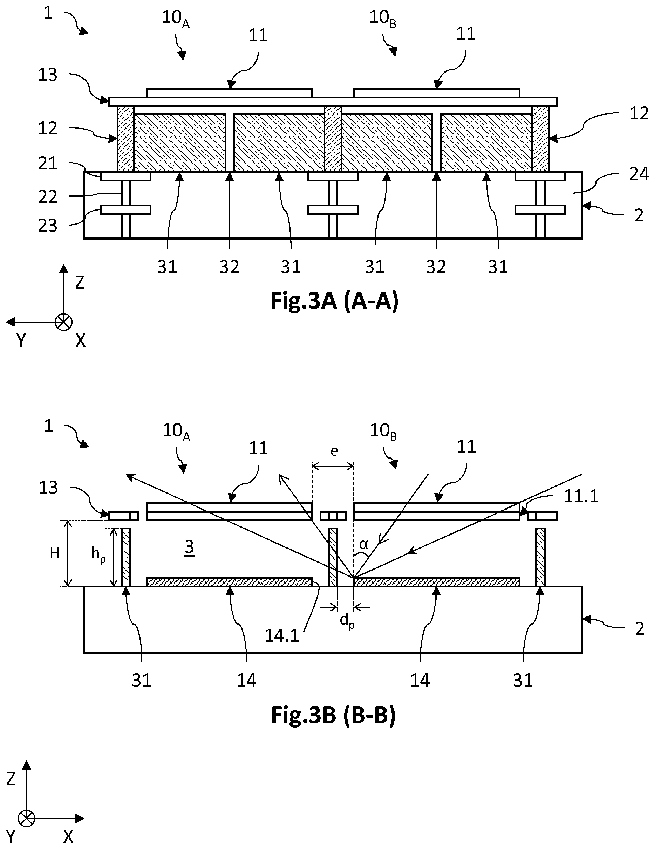

Les figures 2A-2B et 3A-3B illustrent un dispositif de détection 1 de rayonnement électromagnétique selon un mode de réalisation. Les fig. 2A et 2B sont des vues de dessus illustrant les membranes absorbantes 11 suspendues des détecteurs thermiques 10 (fig.2A) et les couches réflectrices 14 séparées deux à deux par des parois verticales opaques 31 (fig.2B). Les fig.3A et 3B sont des vues en coupe du dispositif de détection 1 suivant le plan de coupe A-A (fig.3A) et suivant le plan de coupe B-B (fig.3B).

On définit ici et pour la suite de la description un repère direct tridimensionnel (X,Y,Z), où le plan (X,Y) est sensiblement parallèle au plan d'un substrat 2 du dispositif de détection 1, l'axe Z étant orienté suivant une direction sensiblement orthogonale au plan du substrat 2. Les termes « vertical » et « verticalement » s'étendent comme étant relatifs à une orientation sensiblement parallèle à l'axe Z, et les termes « horizontal » et « horizontalement » comme étant relatifs à une orientation sensiblement parallèle au plan (X,Y). Par ailleurs, les termes « inférieur » et « supérieur » s'étendent comme étant relatifs à un positionnement croissant lorsqu'on s'éloigne du substrat 2 suivant la direction +Z.

Dans cet exemple, le dispositif de détection 1 de rayonnement électromagnétique est adapté à détecter un rayonnement infrarouge. Il comporte une matrice de détecteurs thermiques 10 formant des pixels sensibles, disposés ici en matrice 2x2. Cet exemple est donné uniquement à titre illustratif, des matrices plus complexes étant réalisables, par exemple allant jusqu'à 1024x768 pixels sensibles 10.

Il comprend un substrat 2, par exemple réalisé à base de silicium, comprenant un circuit de lecture réalisé en technologie CMOS, permettant d'appliquer les polarisations électriques nécessaires au fonctionnement des détecteurs thermiques 10 et de lire les signaux issus de ceux-ci en réponse à la détection du rayonnement électromagnétique d'intérêt.

Le circuit de lecture peut comporter une partie inférieure (non représentée) formée de dispositifs électroniques de type MOS, par exemple des transistors, diodes, condensateurs, adaptés à la mise en œuvre des différentes fonctions électroniques du circuit de lecture. Il comporte en outre plusieurs niveaux d'interconnexions électriques assurant les liaisons électriques entre les différents dispositifs MOS et les détecteurs thermiques 10, ainsi que la liaison électrique à au moins un plot de connexion électrique (non représenté) du circuit de lecture avec l'extérieur du dispositif de détection 1.

Le circuit de lecture comporte ainsi plusieurs niveaux d'interconnexions électriques formés chacun d'une pluralité de lignes métalliques sensiblement planaires reliées aux lignes métalliques des niveaux inférieurs par des vias 22 électriquement conducteurs, ou connexions verticales. Les différents niveaux d'interconnexions électriques sont séparés les uns des autres par des couches diélectriques 24, appelées diélectriques inter-métal (ou IMD, pour *Inter-Metal Dielectric,* en anglais), celles-ci étant traversées verticalement par les vias conducteurs 22. Chaque couche diélectrique inter-métal 24 peut être réalisée en un oxyde de silicium SiOₓ ou un nitrure de silicium SiNₓ, voire en un alliage à base d'oxyde de silicium présentant une faible permittivité relative, tel que du SiOF, du SiOC, du SiOCH, etc...

Dans cet exemple, le circuit de lecture comporte un niveau supérieur d'interconnexion métallique formé d'une première portion 21 de ligne métallique, située en regard d'un détecteur thermique 10, et destinée à être reliée électriquement à ce détecteur 10. Les portions 21 de ligne métallique de ce niveau d'interconnexion métallique sont reliées électriquement à des portions 23 de ligne métallique de niveau inférieur par des vias conducteurs 22. Ces portions et les vias conducteurs sont isolés électriquement les uns des autres par une couche diélectrique inter-métal 24.

Le substrat 2 peut comporter en outre une couche d'arrêt de gravure (non représentée) qui recouvre la surface formée par les portions 21 de ligne métallique et par la couche diélectrique inter-métal 24. Cette couche d'arrêt de gravure est notamment adaptée, le cas échéant, à assurer une protection du substrat 2 et du circuit de lecture vis-à-vis d'une attaque chimique, par exemple en milieu acide HF (acide fluorhydrique), mise en œuvre pour graver une partie d'une couche sacrificielle utilisée lors de la réalisation du dispositif de détection 1. Cette couche d'arrêt de gravure forme ainsi une couche hermétique et chimiquement inerte assurant une protection des couches diélectriques inter-métal et des lignes métalliques sous-jacentes vis-à-vis de l'attaque chimique, et est électriquement isolante pour éviter tout court-circuit électrique entre les portions de ligne métallique. La couche d'arrêt de gravure peut être réalisée en alumine Al₂O₃, voire en nitrure ou fluorure d'aluminium. Elle peut présenter une épaisseur comprise entre quelques dizaines et quelques centaines de nanomètres, par exemple comprise entre 10nm et 500nm.

Les détecteurs thermiques 10 comprennent chacun une portion adaptée à absorber le rayonnement à détecter. Cette portion absorbante est isolée thermiquement du substrat 2 et est disposée au niveau d'une membrane 11, dite absorbante, suspendue au-dessus du substrat 2 par des éléments de maintien et d'isolation thermique tels que des piliers d'ancrage 12 associés à des bras de maintien 13 et d'isolation thermique.

Les piliers d'ancrage 12 sont électriquement conducteurs et traversent localement la couche d'arrêt de gravure pour assurer un contact électrique avec la portion 21 de la ligne métallique. La membrane absorbante 11 est espacée du substrat 2, et plus particulièrement de la couche réflectrice 14, d'une distance H typiquement comprise entre 1µm et 5µm, par exemple 2µm environ quand les détecteurs thermiques 10 sont conçus pour la détection d'un rayonnement infrarouge de longueur d'onde comprise entre 8µm et 14µm (bande LWIR de transmission atmosphérique), formant ainsi une cavité quart d'onde 3 améliorant l'absorption du rayonnement électromagnétique par la membrane suspendue 11. Les piliers d'ancrage 12 peuvent présenter une forme de tige ou de colonne, de section droite dans le plan XY sensiblement arrondie (par exemple circulaire), voire polygonale (par exemple carrée ou rectangulaire), d'une surface comprise par exemple entre 0,05µm² et 5µm², par exemple égale à 0,2µm². Ils peuvent être réalisés à base de cuivre ou de tungstène, par exemple en Cu, W, ou WSi, et comporter si nécessaire une couche barrière à base de titane.

Chaque pixel sensible 10 comporte en outre une couche réflectrice 14 reposant sur le substrat 2, et dans cet exemple, reposant sur la couche d'arrêt de gravure. Comme décrit plus loin, elle peut, en variante, être située sous la couche d'arrêt de gravure et être formée par une portion de ligne métallique du niveau supérieur d'interconnexion. La couche réflectrice 14 peut être réalisée en au moins un matériau métallique, par exemple en au moins un matériau à base de cuivre, d'aluminium, voire de tungstène. Dans le cas où elle est située sous une couche d'arrêt de gravure, elle peut être formée d'une même couche continue s'étendant sous chaque pixel sensible. Chaque couche réflectrice 14 est alors une zone de la même couche réflectrice continue.

Dans la suite de la description, les détecteurs thermiques 10 sont des bolomètres dont la membrane absorbante 11 comporte un matériau thermistance dont la conductivité électrique varie en fonction de l'échauffement de la membrane absorbante 11. Cependant, cet exemple est donné à titre illustratif et est nullement limitatif. Tout autre type de détecteur thermique 10 peut être utilisé, par exemple des détecteurs pyroélectriques, ferroélectriques, voire des thermopiles.

Les détecteurs thermiques 10 peuvent être rapprochés les uns des autres, notamment en reliant les bras de maintien 13 de différents détecteurs thermiques 10 à un même pilier d'ancrage 12, l'architecture de lecture des détecteurs thermiques étant alors adaptée, comme le décrivent les documents EP1106980 et EP1359400. Il en résulte une amélioration de la sensibilité des détecteurs de par l'allongement des bras de maintien 13 et une augmentation du taux de remplissage par la réduction de la surface de chaque pixel sensible 10 non dédiée à l'absorption du rayonnement électromagnétique. Le dispositif de détection 1 est ainsi particulièrement adapté aux petits pas de matriçage, en particulier à un pas inférieur ou égal à 12µm.

Le dispositif de détection 1 comporte au moins une paroi verticale opaque 31 située entre deux pixels sensibles 10 adjacents, et réalisée en un matériau opaque vis-à-vis du rayonnement électromagnétique à détecter, c'est-à-dire dont la transmission du rayonnement électromagnétique à détecter est inférieure ou égale à 5%, voire inférieure ou égale à 1%. Elle est configurée pour limiter la diaphotie entre les deux pixels sensibles 10 adjacents. La diaphotie (*crosstalk*, en anglais), ou diaphonie optique, est le phénomène d'influence d'un pixel sensible 10 sur ses voisins. Il s'agit ici notamment de la détection par un pixel sensible 10A d'une partie d'un rayonnement électromagnétique incident sur un pixel sensible adjacent 10B ayant été réfléchie par la couche réflectrice 14. La diaphotie se traduit par une diminution du contraste d'une image détectée, et donc par une dégradation de la fonction de transfert de modulation (FTM) du dispositif de détection 1.

Ainsi, dans cet exemple, la paroi verticale opaque 31 est disposée entre deux pixels sensibles 10 adjacents, et plus précisément est située entre la membrane absorbante 11 d'un pixel sensible 10_{A} et celle du pixel sensible 10_{B} adjacent. Elle s'étend longitudinalement de manière sensiblement parallèle à la bordure 11.1 d'une membrane absorbante 11. Elle peut être rectiligne, comme illustré sur la fig.2B, voire être courbe, ou peut être formée de plusieurs portions rectilignes et inclinées deux à deux. Elle s'étend verticalement, suivant l'axe Z, à partir du substrat 2, de manière sensiblement orthogonale à celui-ci.

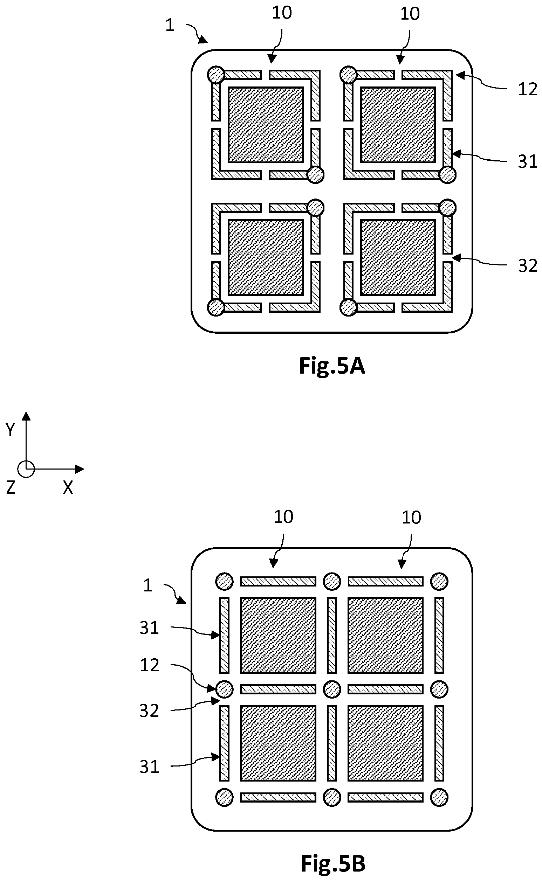

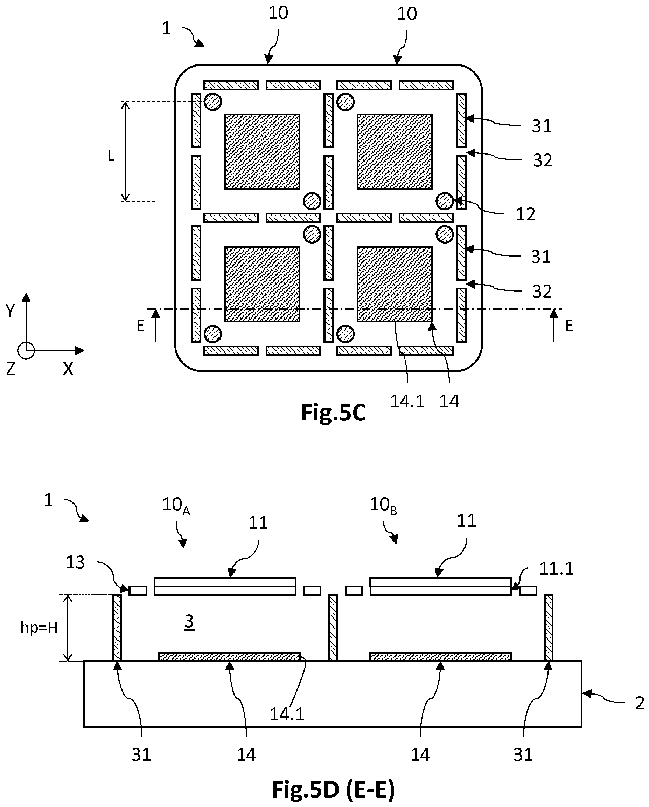

Selon l'invention, comme détaillé plus loin, la paroi verticale opaque 31 est réalisée d'un même tenant avec un pilier d'ancrage 12 (cf. fig.2B). Dans des exemples non conformes à l'invention, la paroi verticale opaque peut être distincte des piliers d'ancrage, c'est-à-dire non physiquement reliée à ces derniers (cf. fig.5B et 5C). De préférence, chaque paroi verticale opaque 31 est distante des bras de maintien 13 et des membranes absorbantes 11 des différents pixels sensibles 10, ceci pour éviter toute perturbation des propriétés thermiques et/ou électriques des détecteurs thermiques 10. Dans ce cas, l'espacement entre la paroi verticale opaque 31 d'une part et les bras de maintien 13 et les membranes absorbantes 11 d'autre part peut être un espacement vertical (suivant l'axe Z) et/ou un espacement horizontal (dans le plan XY). Elle est, de préférence, également distante des couches réflectrices 14 des pixels sensibles 10 adjacents, notamment lorsque les parois verticales opaques 31 sont réalisées d'un seul tenant avec les piliers d'ancrage 12, de manière à éviter, le cas échéant, de court-circuiter électriquement les piliers d'ancrage 12 par la couche réflectrice 14.

Chaque paroi verticale opaque 31 présente une longueur supérieure à sa largeur, avec par exemple un rapport longueur/largeur supérieur ou égal à 2, de préférence supérieur ou égal à 5, voire à 10. A titre illustratif, elle peut ainsi présenter une largeur de 500nm voire moins, et une longueur de 5µm voire plus. La largeur de chaque paroi verticale opaque 31 peut être de l'ordre de quelques centaines de nanomètres à quelques microns. Elle est de préférence inférieure à 1µm, et de préférence inférieure ou égale à 500nm.

De préférence, la longueur d'au moins une paroi verticale opaque 31 située entre deux pixels sensibles 10 adjacents est supérieure ou égale à 50%, 75%, et de préférence 90% de la longueur L d'un côté de pixel sensible. Ici, la longueur L d'un côté d'un pixel sensible est définie comme étant la distance séparant le centre de deux piliers d'ancrage 12 du pixel sensible, les centres des pixels d'ancrage 12 étant projetés orthogonalement sur un axe parallèle à une bordure 11.1 de la membrane absorbante 11 du pixel sensible en question. Alternativement, comme illustré sur la fig.2B, plusieurs parois verticales opaques 31 peuvent s'étendre longitudinalement en regard d'une même bordure 11.1 d'une membrane absorbante 11, et former ainsi un ensemble longitudinal de parois verticales opaques 31. La longueur cumulée de cet ensemble longitudinal de parois verticales opaques 31 peut alors être supérieure ou égale à 50%, de préférence à 75%, voire à 90%, à la longueur L d'un côté d'un pixel sensible.

Dans le cas où plusieurs parois verticales opaques 31 forment un même ensemble longitudinal, les parois verticales opaques 31 sont avantageusement espacées deux à deux, suivant l'axe longitudinal, d'une distance inférieure ou égale à λ₀/10, voire à λ₀/20, λ₀ étant une longueur d'onde centrale de la gamme de longueurs d'onde du rayonnement électromagnétique à détecter, par exemple égale à 10µm ou 11µm environ pour une gamme de longueurs d'onde du rayonnement électromagnétique à détecter allant de 8µm et 14µm. La distance peut ainsi être inférieure ou égale à 1,4µm, par exemple inférieure ou égale à 1,2µm, par exemple égale à 1µm environ, voire égale à 500nm environ. Ainsi, cette ouverture verticale 32 séparant deux parois verticales opaques 31 du même ensemble longitudinal permet de limiter la diaphotie dans la mesure où le faisceau lumineux « voit » une même paroi verticale opaque continue et non pas deux parois verticales opaques distantes l'une de l'autre. De plus, cette ouverture verticale permet d'éviter tout risque de court-circuit électrique entre les piliers d'ancrage, en particulier lorsque deux parois verticales opaques consécutives sont électriquement connectées à des piliers d'ancrage distincts. Par ailleurs, cette ouverture verticale permet également d'accélérer la gravure du matériau sacrificiel utilisé lors de la réalisation de la membrane absorbante 11 (détaillé plus loin) et d'en rendre plus efficace l'évacuation.

Dans cet exemple, comme l'illustre la fig.3A, l'ouverture verticale 32 présente une hauteur suivant l'axe Z égale à la hauteur des deux parois verticales opaques 31, de sorte que ces parois verticales opaques 31 sont distinctes l'une de l'autre. En variante, deux parois verticales opaques 31 consécutives peuvent ne pas être distinctes et peuvent ainsi être reliées l'une à l'autre par une portion longitudinale (non représentée), de sorte que l'ouverture verticale 32 présente une hauteur inférieure à la hauteur desdites parois verticales opaques 31. Dans ce cas, ces parois verticales opaques 31 consécutives ne sont pas électriquement connectées à des piliers d'ancrage distincts, pour éviter ainsi de court-circuiter électriquement le pixel sensible 10.

Comme l'illustre la fig.3B, chaque paroi verticale opaque 31 peut présenter une hauteur hₚ configurée pour limiter notamment la réception, par la membrane absorbante 11 d'un pixel sensible 10_{A}, d'une partie du rayonnement électromagnétique incident sur le pixel sensible 10_{B} adjacent ayant été réfléchie par sa couche réflectrice 14. Cette hauteur hₚ est de préférence supérieure ou égale à dₚ/tan(α), où dₚ est la distance moyenne séparant la bordure d'une couche réflectrice 14 d'un pixel sensible 10 de la bordure en regard de la paroi verticale opaque 31, et α étant l'angle minimal par rapport à la normale formé par un faisceau du rayonnement électromagnétique réfléchi par la couche réflectrice 14 du pixel sensible 10_{B} et détecté par la membrane absorbante 11 du pixel sensible adjacent 10_{A}. Au premier ordre, tan(a)=e/H où e est la distance moyenne séparant la bordure 14.1 d'une couche réflectrice 14 d'un pixel sensible 10, vis-à-vis de la bordure en regard de la membrane absorbante 11 du pixel sensible 10 adjacent, et H étant la distance suivant l'axe Z séparant la couche réflectrice 14 d'une membrane absorbante 11, c'est-à-dire la hauteur de la cavité quart d'onde 3 située sous la membrane absorbante 11. Chaque ou certaines parois verticales opaques 31 peuvent présenter une hauteur hₚ permettant également de limiter la transmission d'une partie d'un rayonnement incident sur le pixel sensible 10_{B} adjacent, ayant été transmise par la membrane absorbante 11 du pixel 10_{B} en direction de la couche réflectrice 14 du pixel sensible 10_{A}. D'une manière générale, la hauteur hₚ des parois verticales opaques 31 est avantageusement supérieure ou égale à 90% de la hauteur H de la cavité quart d'onde 3, celle-ci étant sensiblement égale à la hauteur des piliers d'ancrage 12.

Chaque paroi verticale opaque 31 est réalisée en au moins un matériau opaque vis-à-vis du rayonnement électromagnétique à détecter. Pour un rayonnement ayant une gamme de longueur d'onde comprise par exemple entre 8µm et 14µm environ, la paroi verticale opaque 31 peut ainsi être réalisée en cuivre, tungstène, aluminium, entre autres, et leurs alliages. Une enveloppe à base de titane, par exemple en Ti, TiN ou TiW, ou à base de tantale, par exemple Ta ou TaN, peut entourer la périphérie d'un cœur réalisé à base de Cu, W. Cette enveloppe peut assurer des fonctions de couche barrière vis-à-vis de la diffusion éventuelle du cuivre ou du tungstène. Cette enveloppe présente une épaisseur de l'ordre de quelques dizaines de nanomètres, et ne modifie pas les propriétés optiques de la paroi verticale opaque 31. D'une manière générale, par « à base d'un élément chimique », on entend que le matériau est formé de cet élément chimique, ou est un alliage formé d'au moins cet élément chimique. De préférence, la paroi verticale opaque 31 est réalisée en un matériau réfléchissant vis-à-vis du rayonnement électromagnétique à détecter, tel que le cuivre, le tungstène et l'aluminium, entre autres, et leurs alliages, permettant ainsi d'améliorer la fonction de transfert de modulation (FTM) du dispositif de détection.

De préférence, chaque pixel sensible 10 est longé par au moins une paroi verticale opaque 31 qui s'étend entre ce pixel sensible 10 et un pixel sensible 10 adjacent. Aussi, l'ensemble des parois verticales opaques 31 forme une structure d'isolation optique, de forme alvéolaire, chaque alvéole étant une cavité dans laquelle est situé un détecteur thermique 10 destiné à recevoir le rayonnement électromagnétique à détecter. Cette structure d'isolation optique permet ainsi de fortement limiter la diaphotie entre les pixels sensibles 10.

La structure d'isolation optique comporte ainsi au moins une partie longitudinale opaque située entre les membranes absorbantes 11 des deux pixels sensibles 10 adjacents, qui s'étend suivant un axe longitudinal sensiblement parallèle aux bordures 11.1 desdites membranes absorbantes 11. De préférence, chaque pixel sensible 10 est entouré par quatre parties longitudinales opaques. Chaque partie longitudinale opaque est formée d'au moins une paroi verticale opaque 31, s'étendant à partir du substrat 2 suivant un axe vertical sensiblement parallèle à l'axe Z. Chaque paroi verticale opaque 31 est disposée entre les deux pixels sensibles 10 adjacents, et donc entre les membranes absorbantes 11 desdits pixels sensibles 10. Les parois verticales opaques 31 entourant un même pixel sensible 10 sont avantageusement distinctes les unes des autres, de manière à accélérer la gravure du matériau sacrificiel utilisé lors de la réalisation de la cavité quart d'onde 3 (décrit plus loin) et à en permettre une évacuation efficace, tout en écartant, le cas échéant, les risques de court-circuit électrique du pixel sensible. Elles sont de préférence espacées les unes des autres d'une distance inférieure ou égale à λ₀/10, voire à λ₀/20, par exemple d'une distance inférieure ou égale à 1,4µm, voire à 1µm ou moins.

Dans l'exemple illustré sur la fig.2B, les parois verticales opaques 31 de la structure d'isolation optique s'étendent longitudinalement suivant un axe passant avantageusement par deux piliers d'ancrage 12, permettant ainsi de maximiser le taux de remplissage (*fill factor,* en anglais), c'est-à-dire le rapport entre la surface de la membrane absorbante 11 sur la surface totale du pixel sensible 10, dans le plan du substrat 2.

De plus, les parois verticales opaques 31 sont avantageusement réalisées ici d'un même tenant avec les piliers d'ancrage 12, améliorant ainsi la tenue mécanique des parois verticales opaques 31. Ainsi, les parois verticales opaques 31 et les piliers d'ancrage 12 sont de préférence réalisés en les mêmes matériaux, ce qui simplifie les étapes du procédé de fabrication du dispositif de détection 1.

Des parois verticales opaques 31 peuvent être situées sous des bras de maintien 13 suivant l'axe Z, c'est-à-dire être situées au droit des bras de maintien 13, voire sous des membranes absorbantes 11. Comme l'illustre la fig.3B, les parois verticales opaques 31 présentent alors une hauteur hₚ inférieure à la hauteur H de la cavité quart d'onde 3 pour éviter de venir contacter les bras de maintien 13 et les membranes absorbantes 11. Ainsi, la structure d'isolation optique n'entraîne pas ou quasiment pas de dégradation des propriétés thermiques et/ou électriques des détecteurs thermiques. A titre d'exemple, les parois verticales opaques 31 peuvent être espacées des bras de maintien 13 et/ou des membranes absorbantes 11 d'une distance supérieure ou égale à 100nm, par exemple égale à 200nm. Cette distance peut être de l'ordre de 10% de la hauteur H de la cavité quart d'onde 3. D'autres parois verticales opaques 31 peuvent n'être pas situées au droit d'un bras de maintien 13 ou d'une membrane absorbante 11, et présenter une hauteur hₚ supérieure ou égale à la hauteur H de la cavité quart d'onde 3. De telles parois 31 peuvent ainsi présenter une hauteur égale à celle des piliers d'ancrage 12 (cf. par exemple la fig.5D décrite plus loin).

Ainsi, le dispositif de détection 1 selon le mode de réalisation présente une diaphotie réduite par la présence d'au moins une paroi verticale opaque 31 disposée entre deux pixels sensibles 10 adjacents, en particulier lorsque chaque pixel sensible 10 est optiquement séparé de son voisin par une telle paroi verticale opaque 31. Le fait que les parois verticales opaques 31 qui entourent un même pixel sensible 10 soient distinctes les unes des autres permet d'augmenter la vitesse de la réaction de gravure et de rendre plus efficace l'évacuation du matériau sacrificiel utilisé lors de la réalisation des membranes absorbantes 11. Par ailleurs, le fait que les parois verticales opaques 31 soient situées longitudinalement suivant un axe passant par des piliers d'ancrage 12 permet d'augmenter le taux de remplissage (*fill factor*).

Le dispositif de détection 1 selon l'invention se distingue ainsi de celui décrit dans la demande de brevet EP2447688 qui comporte un détecteur thermique de référence totalement isolé optiquement de son environnement par un capot absorbant. Ce détecteur thermique présente la même structure absorbante que les pixels sensibles, mais ne peut donc être qualifié de pixel sensible dans la mesure où il n'est pas destiné à recevoir le rayonnement électromagnétique à détecter. Aussi, ce dispositif de détection selon ce document de l'art antérieur ne prévoit pas de moyens configurés pour réduire la diaphotie entre les pixels sensibles 10 adjacents.

Le dispositif de détection 1 selon l'invention se distingue également de celui décrit dans la demande de brevet EP3067674 qui comporte des parois verticales disposées entre deux pixels sensibles 10 voisins. En effet, ces parois verticales sont des portions du capot d'encapsulation réalisé par définition en un matériau transparent au rayonnement électromagnétique à détecter. Ce dispositif de détection selon ce document de l'art antérieur ne prévoit pas non plus de moyens structurels configurés pour réduire la diaphotie entre les pixels sensibles 10 adjacents.

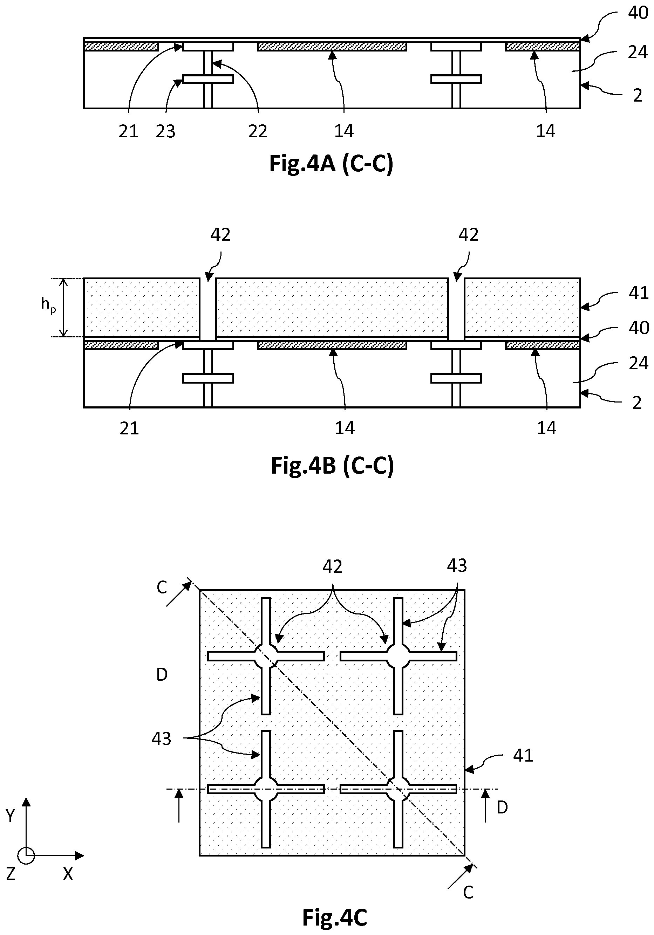

Les figures 4A à 4I illustrent différentes étapes d'un procédé de réalisation du dispositif de détection 1 selon un mode de réalisation, qui diffère de celui illustré sur les figures 2A-2B et 3A-3B essentiellement en ce que les couches réflectrices 14 sont formées par des portions de la ligne métallique du niveau supérieur du circuit de lecture.

En référence à la fig.4A, on réalise un substrat 2 comportant un circuit de lecture de type circuit CMOS apte à alimenter et mesurer le signal délivré par les détecteurs thermiques. Il comporte ainsi des éléments électroniques actifs, tels que des diodes, transistors, condensateurs, résistances..., connectés électriquement par des interconnections métalliques aux détecteurs thermiques, ainsi qu'à un ou plusieurs plots de connexion (non représentés) destinés à relier électriquement le dispositif de détection 1 à un dispositif électronique externe. Comme décrit précédemment, le circuit de lecture comporte ici un niveau d'interconnexion électrique comportant une première portion 21 d'une ligne métallique, électriquement reliée à une portion 23 de ligne métallique d'un niveau inférieur d'interconnexion électrique par un via conducteur 22, et une deuxième portion 14 de la même ligne métallique destinée à former la couche réflectrice. Les vias et lignes métalliques sont séparés les uns des autres par des couches diélectriques inter-métal 24. Le substrat 2 comporte ici une face supérieure au niveau de laquelle affleurent les portions 21, 14 de la même ligne métallique et la couche diélectrique inter-métal 24. Cette étape de réalisation du substrat 2 peut être identique ou similaire à celle décrite dans le document EP2743659.

On dépose, sur au moins une partie de la face supérieure du substrat 2, une couche d'arrêt de gravure 40. Celle-ci recouvre ainsi continûment la couche diélectrique inter-métal 24, la première portion 21 de ligne métallique, et la couche réflectrice 14. La couche d'arrêt de gravure 40 comporte un matériau sensiblement inerte à une gravure chimique mise en œuvre ultérieurement pour supprimer la ou les couches sacrificielles minérales, plus précisément une attaque chimique en milieu HF en phase vapeur. La couche d'arrêt de gravure 40 permet ainsi d'éviter que les couches diélectriques inter-métal du circuit CMOS ne soient gravées lors des étapes de suppression des couches sacrificielles. Elle peut être formée d'alumine Al₂O₃, voire de nitrure d'aluminium, de trifluorure d'aluminium, ou de silicium amorphe non intentionnellement dopé. Elle peut être déposée par exemple par ALD (pour *Atomic Layer Deposition,* en anglais) et présenter une épaisseur par exemple de l'ordre d'une dizaine de nanomètres à quelques centaines de nanomètres, par exemple une épaisseur comprise entre 20nm et 150nm.

En référence aux fig.4B et 4C (la fig.4B étant une vue selon le plan de coupe C-C de la fig.4C), on dépose sur le substrat 2 une couche sacrificielle 41 en un matériau de préférence minéral, par exemple en un oxyde de silicium déposé par PECVD (pour *Plasma Enhanced Chemical Vapor Deposition,* en anglais). Elle s'étend continûment sur sensiblement toute la surface du substrat 2 et recouvre la couche d'arrêt de gravure 40. Dans cet exemple où les parois verticales opaques 31 sont destinées à être situées sous les bras de maintien 13 et/ou sous les membranes absorbantes 11, l'épaisseur suivant l'axe Z de la couche sacrificielle 41 définit ici la hauteur hₚ des parois verticales opaques 31 qui seront ensuite réalisées.

On réalise ensuite des orifices verticaux 42 destinés à la formation des piliers d'ancrage 12, et également des tranchées 43 destinées à la formation des parois verticales opaques 31. Les orifices verticaux 42 et les tranchées 43 sont avantageusement réalisés de manière concomitante, c'est-à-dire simultanée. Ils sont réalisés par photolithographie et gravure. Les orifices verticaux 42 traversent la couche sacrificielle 41 ainsi que la couche d'arrêt de gravure 40 pour déboucher respectivement sur la première portion 21 de ligne métallique. Les orifices verticaux 42 peuvent présenter une section droite dans le plan (X,Y) de forme arrondie, par exemple circulaire, voire polygonale, et de surface sensiblement égale ici à 0,2µm². Les tranchées 43 traversent la couche sacrificielle 41 jusqu'à déboucher ici sur la couche d'arrêt de gravure 40. Les tranchées 43 s'étendent longitudinalement dans le plan (X,Y) de manière à être situées entre deux pixels sensibles 10 adjacents. Elles présentent ici une largeur dans le plan (X,Y) de dimension sensiblement égale à 0,5µm, voire moins. Dans cet exemple, les tranchées 43 débouchent longitudinalement sur les orifices verticaux 42, puisque les parois verticales opaques 31 seront réalisées ici d'un seul tenant avec les piliers d'ancrage 12.

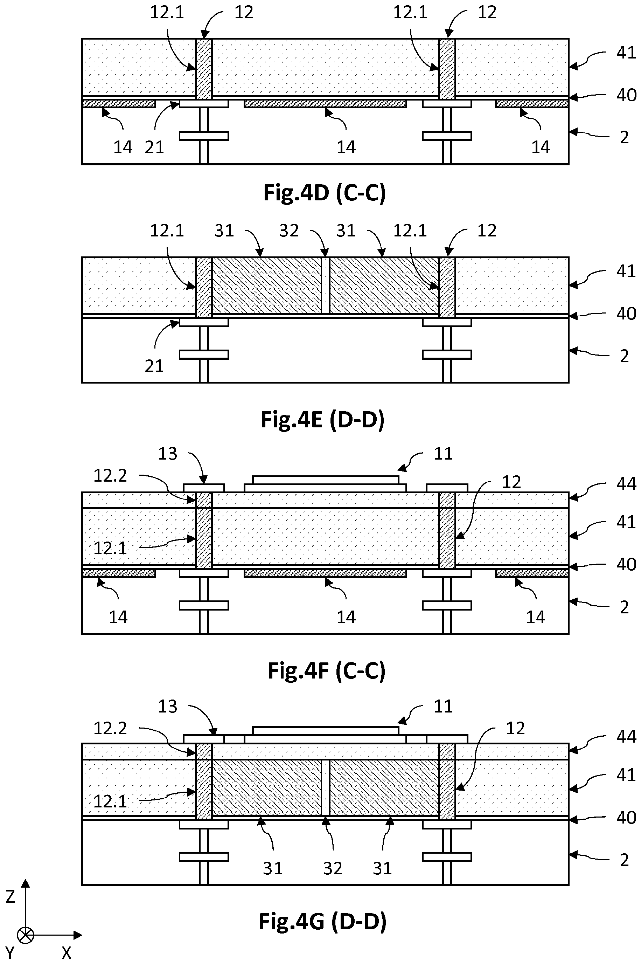

En référence aux fig.4D et 4E (la fig.4D étant une vue suivant le plan de coupe C-C et la fig.4E une vue suivant le plan de coupe D-D), on réalise ensuite une partie inférieure 12.1 des piliers d'ancrage 12 dans les orifices verticaux 42, et on réalise les parois verticales opaques 31 dans les tranchées 43. La partie inférieure 12.1 des piliers d'ancrage 12 et les parois verticales opaques 31 peuvent ici être réalisées de manière simultanée. Elles sont de plus réalisées d'un seul tenant, c'est-à-dire que chaque paroi verticale opaque 31 présente une continuité de manière avec un pilier d'ancrage 12. Elles sont réalisées par remplissage des orifices verticaux 42 et des tranchées 43 par un ou plusieurs matériaux électriquement conducteurs et optiquement opaques. A titre d'exemple, elles peuvent comporter une couche barrière à base de titane déposée par MOCVD (pour *Metal Organic Chemical Vapor Deposition,* en anglais) sur les flancs des orifices verticaux 42 et des tranchées 43, et un cœur à base de cuivre ou de tungstène déposé par exemple par ECD (pour *Electro Chemical Deposition,* en anglais), voire à base d'aluminium, remplissant l'espace délimité transversalement par la couche d'accroche. Les parois verticales opaques 31 peuvent ainsi être réalisées de manière concomitante à la formation des parties inférieures 12.1 des piliers d'ancrage 12, et de manière identique en termes de matériaux. Une étape de CMP permet ensuite de planariser la surface supérieure formée par la couche sacrificielle 41, la partie inférieure 12.1 des piliers d'ancrage 12 et les parois verticales opaques 31.

En référence aux fig.4F et 4G (la fig.4F étant une vue suivant le plan de coupe C-C et la fig.4G une vue suivant le plan de coupe D-D), on réalise ensuite la partie supérieure 12.2 des piliers d'ancrage 12. Pour cela, une deuxième couche sacrificielle 44 est déposée sur la première couche sacrificielle 41, et des orifices verticaux sont réalisés au travers de l'épaisseur de la deuxième couche sacrificielle 44 pour déboucher sur la partie inférieure 12.1 des piliers d'ancrage 12. La partie supérieure 12.2 des piliers d'ancrage 12 est ensuite réalisée de manière identique ou similaire à l'étape de réalisation de la partie inférieure 12.1. On obtient ainsi des piliers d'ancrage 12 dont la hauteur correspond à la hauteur voulue H de la cavité quart d'onde 3. Ils présentent ici une hauteur H supérieure à celle hₚ des parois verticales opaques 31, permettant ainsi de réaliser les membranes absorbantes 11 sans risque de contact thermique et/ou électrique avec les parois verticales opaques 31. En variante, la partie supérieure 12.2 des piliers d'ancrage 12 peut être réalisée par dépôt d'une couche métallique continue, réalisée par exemple à base de TiN et d'Al, puis gravure de la couche métallique continue de manière à ne garder que des plots métalliques au-dessus des parties inférieures 12.1, formant ainsi les parties supérieures 12.2. La partie supérieure 12.2 des piliers d'ancrage 12 peut présenter une épaisseur de l'ordre d'une à quelques centaines de nanomètres, par exemple de l'ordre de 100 à 200 nm.

On réalise ensuite les bras de maintien 13 et les membranes absorbantes 11. Cette étape peut être effectuée de manière identique ou similaire à celle décrite dans le document EP2743659 et n'est pas reprise en détail. Ainsi, la membrane absorbante 11 peut comporter un premier matériau adapté à absorber le rayonnement électromagnétique d'intérêt et un second matériau thermistance dont la conductivité électrique varie en fonction de l'échauffement de la membrane.

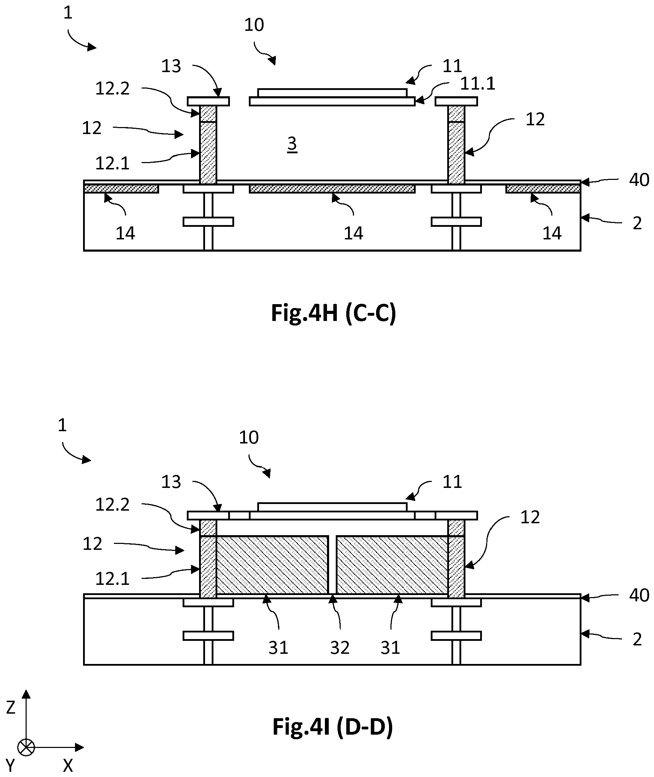

En référence aux fig.4H et 4I (la fig.4H étant une vue suivant le plan de coupe C-C et la fig.4I une vue suivant le plan de coupe D-D), on effectue une gravure des couches sacrificielles 41, 44 de manière à suspendre la membrane absorbante 11. La gravure peut être effectuée par une attaque chimique à l'acide fluorhydrique (HF) en phase vapeur. L'attaque chimique grave sensiblement toute les couches sacrificielles 41, 44 situées au niveau du détecteur thermique 10, permettant ainsi de suspendre la membrane absorbante 11 au-dessus du substrat 2. La réaction d'attaque chimique est ainsi plus rapide et les produits de la réaction d'attaque chimique peuvent être évacués de manière efficace au travers des ouvertures verticales 32 qui séparent les parois verticales opaques 31 les unes des autres, de sorte que des résidus de matériau sacrificiel ne sont quasiment plus présents dans la cavité quart d'onde 3. De plus, la faible dimension des ouvertures verticales 32 séparant les parois verticales opaques 31 permet également de limiter la transmission du rayonnement électromagnétique d'un pixel sensible 10 à l'autre, réduisant ainsi la diaphotie.

Les figures 5A à 5C sont des vues de dessus de dispositifs de détection selon différents exemples, qui se distinguent de celui illustré sur les fig.2A-2B et 3A-3B essentiellement par l'agencement des parois verticales opaques 31 et le nombre et la disposition des piliers d'ancrage 12. La figure 5D est une vue en coupe suivant le plan E-E de la variante illustrée sur la fig.5C.

Ainsi, la fig.5A illustre un dispositif de détection 1 dans lequel chaque pixel sensible 10 comporte deux piliers d'ancrage 12 qui ne sont pas partagés avec des pixels sensibles 10 adjacents. Dans cet exemple, des parois verticales opaques 31 sont réalisées d'un seul tenant avec les piliers d'ancrage 12 alors que d'autres en sont distinctes. Par ailleurs, deux rangées parallèles de parois verticales opaques 31 sont disposées entre deux pixels sensibles 10 adjacents. D'une manière générale, cet agencement de parois verticales opaques 31 qui entourent la membrane absorbante 12 de chaque pixel sensible 10 est particulièrement avantageux lorsque ces parois sont réalisées en un matériau réfléchissant, améliorant ainsi la fonction de transfert de modulation du dispositif de détection 1.

La fig.5B illustre un dispositif de détection 1 non conforme à l'invention dans lequel les parois verticales opaques 31 sont chacune distinctes des piliers d'ancrage 12. Ainsi, des ouvertures verticales 32 sont formées entre chaque paroi verticale opaque 31 et le pilier d'ancrage 12 voisin, dont la dimension dans le plan XY est de préférence inférieure ou égale à λ₀/10, voire à λ₀/20, par exemple inférieure ou égale à 1,4µm. Chaque côté d'une couche réflectrice 14 est ici longé par une seule paroi verticale opaque 31. Par ailleurs, une seule paroi verticale opaque 31 est située entre deux couches réflectrices 14 adjacentes, permettant ainsi d'améliorer le taux de remplissage associé à chaque pixel sensible 10. Les parois verticales opaques 31 n'étant pas au droit d'un bras de maintien 13 ou d'une membrane absorbante 11 peut présenter une hauteur hₚ plus importante, par exemple peut présenter la même hauteur que les piliers d'ancrage 12, réduisant encore la diaphotie entre les pixels sensibles 10.

Les fig.5C et 5D illustrent un dispositif de détection 1 non conforme à l'invention qui diffère de celui illustré sur la fig.5A essentiellement en ce que les parois verticales opaques 31 ne sont pas disposées longitudinalement suivant un axe passant par deux piliers d'ancrage 12 voisins, mais entourent non seulement la membrane absorbante 11 des pixels sensibles 10, mais également les piliers d'ancrage 12. Le taux de remplissage associé à chaque pixel sensible 10 n'est pas optimal, mais les parois verticales opaques 31 forment ici plusieurs ouvertures verticales 32 situées aux coins des pixels sensibles 10 ainsi qu'au milieu des bordures 14.1 des couches réflectrices 14, permettant ainsi une gravure plus rapide de la ou des couches sacrificielles ainsi qu'une évacuation plus importante des matériaux sacrificiels. Par ailleurs, les parois verticales opaques 31 ne sont ici pas situées sous des bras de maintien 13 ni sous des membranes absorbantes 11, de sorte qu'elles peuvent présenter une hauteur hₚ égale, voire supérieure à la hauteur H de la cavité quart d'onde 3. Elles peuvent, par exemple, présenter une hauteur hₚ sensiblement égale à la hauteur des piliers d'ancrage 12. Ainsi, la diaphotie entre les pixels sensibles 10 est encore réduite. La réalisation d'une telle variante est simplifiée par rapport à celle décrite en référence aux fig.4A-4I, dans la mesure où il n'est pas nécessaire de réaliser la partie supérieure 12.2 des piliers d'ancrage 12.

Des modes de réalisation particuliers viennent d'être décrits. Différentes variantes et modifications apparaîtront à l'homme du métier.

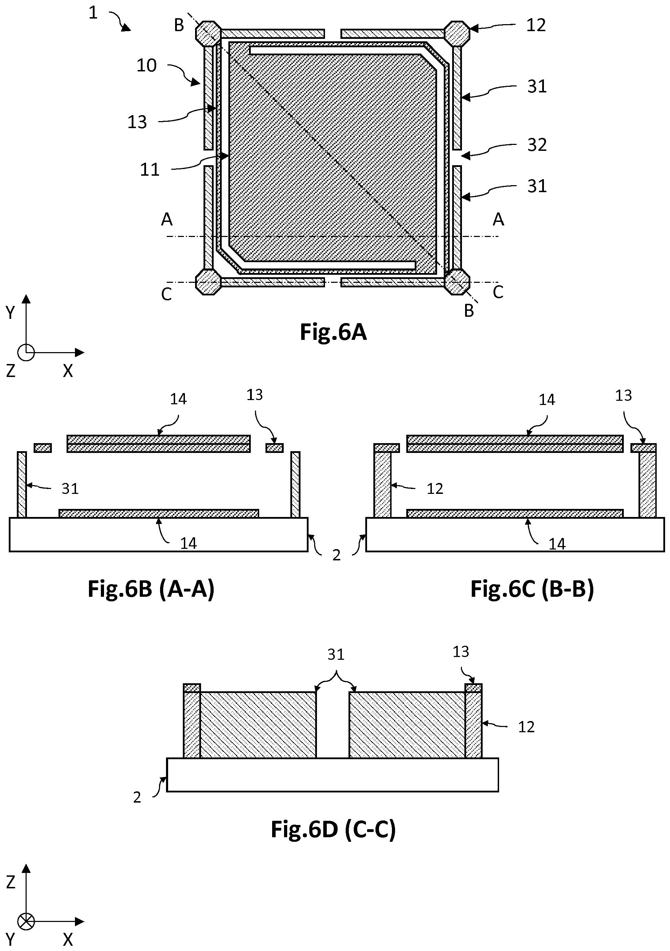

Ainsi, la figure 6A est une vue schématique et partielle d'un dispositif de détection 1 selon une autre variante de réalisation. Les figures 6B, 6C, 6D est des vues en coupe de ce dispositif de détection 1, respectivement suivant les plans de coupe A-A, B-B, et C-C. Le dispositif de détection se distingue de ceux décrits précédemment essentiellement en ce que les parois verticales opaques 31 présentent une hauteur suivant l'axe Z sensiblement égale à celle des piliers d'ancrage 12. Elles entourent le détecteur thermique 10 suivant ses quatre côtés dans le plan XY. Chaque côté est bordé par deux parois verticales opaques qui s'étendent longitudinalement de manière coaxiale, et sont espacées dans le plan XY par une ouverture 32. Elles présentent une épaisseur (ou largeur) dans le plan XY par exemple comprise entre 200nm et 500nm, et sont espacées dans le plan XY l'une de l'autre par l'ouverture 32 d'une distance comprise par exemple entre 200nm et 1µm. Chaque paroi verticale opaque est réalisée d'un seul tenant avec un pilier d'ancrage 12 et en le ou les mêmes matériaux. Chaque bras de maintien 13 s'étend dans le plan XY à partir d'un pilier d'ancrage 12. Il borde ici deux côtés de la membrane absorbante 11 avant d'être assemblé à elle. Chaque bras de maintien 13 peut présenter une largeur dans le plan XY par exemple comprise entre 100nm et 300nm. Dans la mesure où les parois verticales opaques 31 présentent une hauteur égale à celle des piliers d'ancrage 12, les bras de maintien 13 sont espacés de celles-ci dans le plan XY d'une distance par exemple comprise entre 100nm et 300nm. Ainsi, le dispositif de détection 1 présente ici une diaphotie réduite et un facteur de remplissage élevé. Par ailleurs, la tenue mécanique des parois 31 est renforcée par le fait qu'elles sont réalisées d'un seul tenant avec les piliers 12. Et le procédé est simplifié par le fait que les parois 31 et les piliers 12 sont réalisés en une même étape et avec le ou les mêmes matériaux.

## Revendications

1. Dispositif de détection (1) d'un rayonnement électromagnétique, comprenant :
- un substrat (2) comportant un circuit de lecture ;
- une matrice de détecteurs thermiques (10) destinés à absorber le rayonnement électromagnétique à détecter, disposés sur le substrat (2), chaque détecteur thermique (10) comprenant :
∘ une membrane absorbante (11) suspendue au-dessus du substrat (2) par des piliers d'ancrage (12) disposés sur et au contact du substrat (2), et par des bras de maintien (13), les piliers d'ancrage (12) et les bras de maintien (13) assurant une connexion électrique de la membrane absorbante (11) au circuit de lecture, et
∘ une couche réflectrice (14) disposée sur le substrat (2) en regard de la membrane absorbante (11) ;
- au moins une paroi verticale (31), disposée sur et au contact du substrat (2) et s'étendant longitudinalement entre deux détecteurs thermiques (10) adjacents, la
paroi verticale (31) s'étendant longitudinalement suivant un axe passant par deux piliers d'ancrage (12) voisins,
**caractérisé en ce que** la paroi verticale est réalisée en matériau opaque vis-à-vis du rayonnement électromagnétique à détecter, et
est réalisée d'un seul tenant avec au moins un pilier d'ancrage (12).

2. Dispositif de détection (1) selon la revendication 1, dans lequel chaque détecteur thermique (10) est entouré, dans un plan parallèle au substrat, par des parois verticales opaques (31).

3. Dispositif de détection (1) selon la revendication 1 ou 2, dans lequel chaque paroi verticale opaque (31) est réalisée en le ou les mêmes matériaux que les piliers d'ancrage (12).

4. Dispositif de détection (1) selon l'une quelconque des revendications 1 à 3, dans lequel la paroi verticale opaque (31) est distante des bras de maintien (13) et de la membrane absorbante (11).

5. Dispositif de détection (1) selon l'une quelconque des revendications 1 à 4, dans lequel chaque détecteur thermique (10) comporte quatre piliers d'ancrage (12), chacun des côtés de la membrane absorbante (11), dans un plan parallèle au substrat (2), étant bordé par au moins deux parois verticales opaques (31) distantes l'une de l'autre suivant leur axe longitudinal.

6. Dispositif de détection (1) selon la revendication 5, dans lequel lesdites parois verticales opaques (31) étant distantes l'une de l'autre suivant leur axe longitudinal d'une distance inférieure ou égale à λ₀/10, λ₀ étant une longueur d'onde centrale d'une gamme de longueurs d'onde du rayonnement électromagnétique à détecter.

7. Dispositif de détection (1) selon la revendication 6, dans lequel ladite distance est inférieure ou égale à 1,4µm.

8. Dispositif de détection (1) selon l'une quelconque des revendications 1 à 7, dans lequel un même détecteur thermique (10) est entouré d'une pluralité de parois verticales opaques (31) distinctes les unes des autres et espacées les unes des autres d'une distance non nulle.

9. Dispositif de détection (1) selon l'une quelconque des revendications 1 à 8, dans lequel le matériau opaque présente une transmission du rayonnement électromagnétique à détecter inférieure ou égale à 5%.

10. Dispositif de détection (1) selon l'une quelconque des revendications 1 à 9, dans lequel le rayonnement électromagnétique à détecter présente une gamme de longueurs d'onde comprise de 8µm à 14µm.

11. Dispositif de détection (1) selon l'une quelconque des revendications 1 à 10, dans lequel une ou plusieurs parois verticales opaques (31) consécutives bordent un même côté d'un détecteur thermique (10) dans un plan parallèle au substrat (2) sur au moins 50% de la longueur du côté.

12. Procédé de fabrication d'un dispositif de détection (1) selon l'une quelconque des revendications précédentes, comportant les étapes suivantes :
- fourniture du substrat (2) ;
- dépôt d'une couche sacrificielle (41) sur le substrat (2) ;
- réalisation d'au moins une paroi verticale opaque (31) et des piliers d'ancrage (12) au travers de la couche sacrificielle (41) ;
- réalisation des bras de maintien (13) et de la membrane absorbante (11) sur la couche sacrificielle (41) ;
- suppression de la couche sacrificielle (41).

13. Procédé selon la revendication 12, dans lequel les piliers d'ancrage (12) et la paroi verticale opaque (31) sont réalisées simultanément et en le ou les mêmes matériaux.

## Patentansprüche

1. Vorrichtung zur Detektion (1) einer elektromagnetischen Strahlung, umfassend:
- ein Substrat (2), das eine Leseschaltung aufweist;
- eine Matrix aus Thermodetektoren (10), die dazu bestimmt sind, die zu detektierende elektromagnetische Strahlung zu absorbieren, und auf dem Substrat (2) angeordnet sind, wobei jeder Thermodetektor (10) umfasst:
∘ eine absorbierende Membran (11), die über dem Substrat (2) durch Verankerungsstützen (12), die auf und in Kontakt mit dem Substrat (2) angeordnet sind, und durch Haltearme (13) aufgehängt ist, wobei die Verankerungsstützen (12) und die Haltearme (13) eine elektrische Verbindung der absorbierenden Membran (11) mit der Leseschaltung sicherstellen, und
∘ eine reflektierende Schicht (14), die auf dem Substrat (2) gegenüber der absorbierenden Membran (11) angeordnet ist;
- wenigstens eine vertikale Wand (31), die auf und in Kontakt mit dem Substrat (2) angeordnet ist und sich in Längsrichtung zwischen zwei benachbarten Thermodetektoren (10) erstreckt, wobei sich die vertikale Wand (31) in Längsrichtung entlang einer Achse erstreckt, die durch zwei benachbarte Verankerungsstützen (12) verläuft,
**dadurch gekennzeichnet, dass** die vertikale Wand aus einem gegenüber der zu detektierenden elektromagnetische Strahlung opaken Material hergestellt ist und mit wenigstens einer Verankerungsstütze (12) aus einem Stück ausgebildet ist.

2. Vorrichtung zur Detektion (1) nach Anspruch 1, wobei jeder Thermodetektor (10) in einer zum Substrat parallelen Ebene von opaken vertikalen Wänden (31) umgeben ist.

3. Vorrichtung zur Detektion (1) nach Anspruch 1 oder 2, wobei jede opake vertikale Wand (31) aus demselben Material oder denselben Materialien wie die Verankerungsstützen (12) hergestellt ist.

4. Vorrichtung zur Detektion (1) nach einem der Ansprüche 1 bis 3, wobei die opake vertikale Wand (31) von den Haltearmen (13) und der absorbierenden Membran (11) entfernt ist.

5. Vorrichtung zur Detektion (1) nach einem der Ansprüche 1 bis 4, wobei jeder Thermodetektor (10) vier Verankerungsstützen (12) aufweist, wobei jede der Seiten der absorbierenden Membran (11) in einer zum Substrat (2) parallelen Ebene von wenigstens zwei opaken vertikalen Wänden (31) eingefasst wird, die entlang ihrer Längsachse voneinander beabstandet sind.

6. Vorrichtung zur Detektion (1) nach Anspruch 5, wobei die opaken vertikalen Wände (31) entlang ihrer Längsachse um einen Abstand voneinander beabstandet sind, der kleiner oder gleich λ₀/10 ist, wobei λ₀ eine zentrale Wellenlänge eines Wellenlängenbereichs der zu detektierenden elektromagnetischen Strahlung ist.

7. Vorrichtung zur Detektion (1) nach Anspruch 6, wobei der Abstand kleiner oder gleich 1,4 µm ist.

8. Vorrichtung zur Detektion (1) nach einem der Ansprüche 1 bis 7, wobei ein und derselbe Thermodetektor (10) von mehreren opaken vertikalen Wände (31) umgeben ist, die voneinander verschieden sind und um einen von null verschiedenen Abstand voneinander beabstandet sind.

9. Vorrichtung zur Detektion (1) nach einem der Ansprüche 1 bis 8, wobei das opake Material eine Durchlässigkeit für die zu detektierende elektromagnetische Strahlung aufweist, die kleiner oder gleich 5 % ist.

10. Vorrichtung zur Detektion (1) nach einem der Ansprüche 1 bis 9, wobei die zu detektierende elektromagnetische Strahlung einen Wellenlängenbereich von 8 µm bis 14 µm aufweist.

11. Vorrichtung zur Detektion (1) nach einem der Ansprüche 1 bis 10, wobei eine oder mehrere aufeinander folgende opake vertikale Wände (31) ein und dieselbe Seite eines Thermodetektors (10) in einer zum Substrat (2) parallelen Ebene auf wenigstens 50 % der Länge der Seite einfassen.

12. Verfahren zur Herstellung einer Vorrichtung zur Detektion (1) nach einem der vorhergehenden Ansprüche, welches die folgenden Schritte umfasst:
- Bereitstellen des Substrats (2);
- Aufbringen einer Opferschicht (41) auf das Substrat (2);
- Herstellen wenigstens einer opaken vertikalen Wand (31) und der Verankerungsstützen (12) durch die Opferschicht (41) hindurch;
- Herstellen der Haltearme (13) und der absorbierenden Membran (11) auf der Opferschicht (41);
- Entfernen der Opferschicht (41).

13. Verfahren nach Anspruch 12, wobei die Verankerungsstützen (12) und die opake vertikale Wand (31) gleichzeitig und aus demselben Material oder denselben Materialien hergestellt werden.

## Claims

1. Device (1) for detecting electromagnetic radiation, comprising:
- a substrate (2) comprising a readout circuit;
- a matrix of thermal detectors (10) intended to absorb the electromagnetic radiation to be detected, disposed on the substrate (2), each thermal detector (10) comprising:
∘ an absorbent membrane (11) suspended above the substrate (2) by anchoring pillars (12) disposed on and in contact with the substrate (2), and by holding arms (13), the anchoring pillars (12) and the holding arms (13) ensuring an electrical connection of the absorbent membrane (11) to the readout circuit, and
∘ a reflective layer (14) disposed on the substrate (2) facing the absorbent membrane (11);
- at least one vertical wall (31), disposed on and in contact with the substrate (2) and extending longitudinally between two adjacent thermal detectors (10), the vertical wall (31) extending longitudinally along an axis passing through two neighboring anchoring pillars (12),
**characterized in that** the vertical wall is produced in a material that is opaque to the electromagnetic radiation to be detected and is produced in a single piece with at least one anchoring pillar (12).

2. Detection device (1) according to Claim 1, wherein each thermal detector (10) is surrounded, in a plane parallel to the substrate, by opaque vertical walls (31).

3. Detection device (1) according to Claim 1 or 2, wherein each opaque vertical wall (31) is produced in the same material or materials as the anchoring pillars (12).

4. Detection device (1) according to any one of Claims 1 to 3, wherein the opaque vertical wall (31) is at a distance from the holding arms (13) and from the absorbent membrane (11).

5. Detection device (1) according to any one of Claims 1 to 4, wherein each thermal detector (10) comprises four anchoring pillars (12), each of the sides of the absorbent membrane (11), in a plane parallel to the substrate (2), being bordered by at least two opaque vertical walls (31) at a distance from one another along their longitudinal axis.

6. Detection device (1) according to Claim 5, wherein said opaque vertical walls (31) are at a distance from one another along their longitudinal axis by a distance less than or equal to λ₀/10, λ₀ being a central wavelength of a range of wavelengths of the electromagnetic radiation to be detected.

7. Detection device (1) according to Claim 6, wherein said distance is less than or equal to 1.4 µm.

8. Detection device (1) according to any one of Claims 1 to 7, wherein one and the same thermal detector (10) is surrounded by a plurality of opaque vertical walls (31) that are distinct from one another and spaced apart from one another by a non-zero distance.

9. Detection device (1) according to any one of Claims 1 to 8, wherein the opaque material exhibits a transmission of the electromagnetic radiation to be detected less than or equal to 5%.

10. Detection device (1) according to any one of Claims 1 to 9, wherein the electromagnetic radiation to be detected exhibits a range of wavelengths of from 8 µm to 14 µm.

11. Detection device (1) according to any one of Claims 1 to 10, wherein one or more consecutive opaque vertical walls (31) border one and the same side of a thermal detector (10) in a plane parallel to the substrate (2) over at least 50% of the length of the side.

12. Method for fabricating a detection device (1) according to any one of the preceding claims, comprising the following steps:
- supplying the substrate (2);
- depositing a sacrificial layer (41) on the substrate (2);
- producing at least one opaque vertical wall (31) and anchoring pillars (12) through the sacrificial layer (41);
- producing the holding arms (13) and the absorbent membrane (11) on the sacrificial layer (41);
- eliminating the sacrificial layer (41).

13. Method according to Claim 12, wherein the anchoring pillars (12) and the opaque vertical wall (31) are produced simultaneously and in the same material or materials.
